# EUROPÄISCHE PATENTSCHRIFT

(11) **EP 1 341 471 B1**
(45) Veröffentlichungstag und Bekanntmachung des Hinweises auf die Patenterteilung: **01.06.2005**
(21) Anmeldenummer: 01270284.1
(22) Anmeldetag: 03.12.2001
(51) Int. Cl.: A61C 13/00, B23Q 3/00

(54) **HALTEVORRICHTUNG FÜR EIN ZAHNERSATZ-ODER GRUNDGERÜSTMODELL**
HOLDING DEVICE FOR A DENTURE OR BASE STRUCTURE MODEL
DISPOSITIF DE MAINTIEN POUR MODELE DE PROTHESE DENTAIRE OU DE STRUCTURE DE BASE

(30) Priorität: 12.12.2000 CH 241500
(43) Veröffentlichungstag der Anmeldung: 10.09.2003
(73) Patentinhaber: Eidgenössische Technische Hochschule Zürich, 8092 Zürich (CH)
(72) Erfinder: FILSER, Frank, CH-8102 Oberengstringen (CH); GAUCKLER, Ludwig, CH-8049 Zürich (CH); KOCHER, Peter, CH-4533 Riedholz SO (CH); LUETHY, Heinz, CH-2000 Neuchâtel (CH); SCHAERER, Peter, CH-8053 Zürich (CH); HOERHOLD, Heiner, 64654 Büdingen (DE); KREUDER, Peter, 61231 Bad Nauheim (DE); FECHER, Stefan, 63867 Johannesberg (DE)
(74) Vertreter: Patentanwälte Breiter + Wiedmer AG
(86) Internationale Anmeldenummer: PCT/CH2001/000693
(87) Internationale Veröffentlichungsnummer: WO 2002/047573

(56) Entgegenhaltungen:
- EP-A- 0 402 720
- WO-A-99/47065

## Beschreibung

Die Erfindung bezieht sich auf eine Haltevorrichtung mit einem zahntechnisch hergestellten, individuellen Zahnersatz- oder Grundgerüstmodell und Mitteln zum Aufspannen der Vorrichtung in einer Vermessungsmaschine. Weiter betrifft die Erfindung ein Verfahren zur Positionierung eines solchen Modells in einer Haltevorrichtung.

Zahnersatz- oder Grundgerüstmodelle, im folgenden Präparationsmodelle genannt, haben unterschiedliche Formen und Grössen, sie bestehen vorwiegend aus Modellierwachs oder Modellierkunststoff. Deren Vermessung ist erforderlich, um mit Hilfe manueller, halbautomatischer oder automatischer Fertigungseinrichtungen den Zahnersatz oder die Grundgerüste für Zahnrestaurationen aus einem industriell vorgefertigten Rohling herauszuarbeiten. Zahnrestaurationen sind z.B. Zahnkronen und -brücken, die ein lasttragendes Grundgerüst aufweisen, auf welches weitere Schichten aus Porzellan, Keramik oder Kunststoff aufgebracht werden. Grundgerüste sind Einzelanfertigungen und werden bei normalem Ablauf einmal individuell für einen Patienten hergestellt. Ähnlich verhält es sich bei Zahnersatz, welcher wie erwähnt neben dem Grundgerüst bereits Schichten aus Porzellan, Keramik oder Kunststoff enthält.

Individuell für einen Patienten hergestellte Präparationsmodelle variieren in bezug auf Länge, Breite und Positionierung der Einzelteile, sie können sowohl in cranio-caudaler als auch in bukko-palatinaler Richtung entsprechend den anatomischen Verhältnissen verschieden gekrümmt sein. Für Zahnkronen bestehen Grundgerüste aus einem Käppchen. Diese haben eine die Kavität bildende Innenseite und eine Aussenseite, die ganz oder teilweise beschichtet werden kann. Die Innenseite der Kavität passt genau auf den vom Zahnarzt präparierten natürlichen Zahn, den Zahnstumpf oder auch auf einen künstlichen Zahnstumpf, z.B. ein Implantat. Zahnbrücken bestehen aus mehreren verbundenen Gliedern, von denen mindestens eines als Käppchen ausgebildet ist, während die anderen als Brücken- und/oder Extensionsglieder ausgebildet sein können. Kavitäten müssen für sich und in Ausrichtung zu den anderen Kavitäten hinterschneidungsfrei sein, damit die Zahnrestauration als ganzes auf die präparierten Zähne aufgesetzt werden kann.

Die Vermessung eines Präparationsmodells bietet gegenüber der Vermessung eines Gipsmodells den gewichtigen Vorteil, dass der Zahntechniker wie bisher mit seinen vertrauten Hilfsmitteln die physischen Modelle gestalten und beurteilen kann. Bei derart komplex geformten Objekten sind visuelle und haptische Eindrücke sehr wichtig. Eine Ergänzung der Vermessungsdaten am Computer bietet dem Zahntechniker nicht die gleichen gewohnten Eindrücke und stellt daher viel höhere Anforderungen an sein Abstraktions- und Vorstellungsvermögen. Die Herstellung von Präparationsmodellen aus Wachs, Kunststoff oder auch anderer leichtverarbeitbarer Werkstoffe ist in der Zahntechnik als gemeines Fachwissen und Handlungsanleitung bekannt und daher Stand der Technik. Diese Technik wird insbesondere auch für Abformverfahren, z.B. bei der verbreiteten Giess- oder auch der Heisspresstechnologie, angewendet. Die Vermessung solcher Präparationsmodelle erfordert deren Fixierung in einer Vermessungsmaschine, vorzugsweise auf deren Rotationswelle.

Präparationsmodelle, also insbesondere Modelle für Grundgerüste für Zahnkronen und -brücken, werden in der Zahntechnik bereits vielfach verwendet. Sie werden bei Giessverfahren und Heisspressverfahren abgeformt, wobei z.B. eine Negativform des Grundgerüstes in einer Feuerfestform entsteht. Die Negativform stellt eine Kavität dar, die dann mit dem Dentalwerkstoff gefüllt wird. Diese Verfahren werden hier nicht betrachtet.

Andere Verfahren vermessen das Präparationsmodell digital, oder sie übertragen mittels mechanischer Kopplung die Form des Präparationsmodells während der Vermessung auf die Bearbeitungswerkzeuge. Alle derartigen Verfahren benötigen eine geeignete Haltevorrichtung für das Präparationsmodell.

Die DE,C1 19916148 beschreibt eine universelle Halterung zum Halten von Arbeitsmitteln, u.a. Modellen in der Zahntechnik. Durch die Kombination von starren und verformbaren Teilen in der Halterung können beliebige Einstellwinkel erreicht werden. Der verformbare Teil ist kissenähnlich ausgebildet und weist eine reversibel verformbare Aussenhaut auf, welche mit einem Granulat gefüllt ist. Dies erlaubt ein räumliches einhändiges Ausrichten von Arbeitsstükken während der Bearbeitung, insbesondere beim Ausgiessen von zahnärztlichen Abdrücken und zahntechnischen Modellen.

Eine automatische Werkzeugmaschine zur Vermessung von Präparationsmodellen und zur Herstellung von Grundgerüsten, insbesondere für Zahnkronen und/oder Zahnbrücken von genauer dreidimensionaler Gestalt, wird in der PCT/CH 00/00623 beschrieben. Diese Werkzeugmaschine umfasst einen Maschinenrahmen oder ein -gehäuse, mit einer Rotationswelle für einen Träger des Rohlings auf einer Seite und einen Träger des Präparationsmodells auf der anderen Seite, wenigstens eine Bearbeitungseinheit, wenigstens eine Vermessungs- bzw. Digitalisierungseinheit und eine elektronische Rechen- und Steuereinheit für alle Antriebsorgane. Es ist eine Bewegungseinheit mit drei Translationsachsen in x-, y- und z-Richtung für Bearbeitungseinheit/en und Vermessungseinheit/en ausgebildet. Die Digitalisierung des Präparationsmodells und die Bearbeitung des Rohlings werden zeitlich entkoppelt auf derselben Werkzeugmaschine durchgeführt. Vor der Bearbeitung des Rohlings werden aus den ermittelten und gespeicherten Digitalisierungsdaten, einem vorgegebenen, materialspezifischen Skalierungsfaktor und der Werkzeuggeometrie die Bearbeitungswege für den Rohling berechnet.

Mit Blick auf den Stand der Technik lässt sich feststellen, dass keine überzeugende spezifische Haltevorrichtung für zahnärztliche Präparationsmodelle bekannt ist, es existieren lediglich rudimentäre Hilfslösungen.

Das Dokument EP 0 402 720 offenbart eine Haltevorrichtung gemäß dem Oberbegriff vom Anspruch 1.

Der vorliegenden Erfindung liegt deshalb die Aufgabe zugrunde, eine Haltevorrichtung der eingangs genannten Art zu schaffen, bei welcher die Individualität des Präparationsmodells und seine komplexe Form besonders berücksichtigt werden. Das Präparationsmodell muss sich hinterschneidungsfrei fixieren lassen. Weiter soll ein Verfahren zur Positionierung eines Präparationsmodells in einer Haltevorrichtung geschaffen werden.

In bezug auf die Vorrichtung wird die Aufgabe erfindungsgemäss dadurch gelöst, dass die Haltevorrichtung einen mechanisch stabilen Rahmen mit in Abstand angeordneten Bohrungen aufweist, in denen wenigstens zwei zumindest in axialer Richtung verschiebbare Haltestifte arretiert sind, welche mittels eines Haftvermittlers stimseitig mit dem gegenüber einer definierten Position hinterschneidungsfrei ausgerichteten Präparationsmodell verbunden sind und dieses starr und spannungsfrei am Rahmen fixieren, und der bestückte Rahmen mit einem maschinenseitigen Spannadapter verrutsch- und verdrehsicher in der Vermessungsmaschine einspannbar ist. Spezielle und weiterbildende Ausführungsformen der Haltevorrichtung sind Gegenstand von abhängigen Patentansprüchen.

Der Ort und die Anzahl der Haltestifte werden aufgrund der Erfahrungen des Fachmanns und/oder mit Optimalisierungsrechnungen festgelegt. Diese hängen insbesondere von der Form und der Grösse des Präparationsmodells ab. Die vorerwähnte Position bezüglich des Präparationsmodells ist durch den Spannadapter und z.B. eine Anflachung definiert.

Erfahrungen und/oder Berechnungen berücksichtigen vorteilhaft auch, dass durch die Mitvermessung der Haltestifte die Lage und Dimensionierung der Haltestege des später oder gleichzeitig aus einem Rohling herausgearbeiteten Werkstücks festgelegt wird. Dieser Rohling muss während der Bearbeitung sicher gehaltert werden.

Der erfindungsgemäss verwendete Rahmen kann in verschiedenen Formen, Breiten, Längen und Querschnittsformen ausgeführt sein. Weiter kann dieser Rahmen geschlossen oder U-förmig ausgebildet sein, wobei sich die beiden Schenkel vorzugsweise über die ganze Länge des Präparationsmodells erstrecken.

Der Rahmen besteht zweckmässig aus einem Metall, beispielsweise Aluminium oder einer Aluminiumlegierung, oder aus einem mechanisch festen Kunststoff, z.B. Makolon. Die Haltestifte für das Präparationsmodell können aus dem gleichen Material, aber auch aus einem mechanisch festen Kunststoff bestehen.

Bei einem quadratisch oder rechtwinklig ausgebildeten festen Rahmen sind die Bohrungen vorzugsweise über den ganzen Rahmen verteilt angeordnet, in der Regel in regelmässigem Abstand. An für die Halterung des Präparationsmodells wichtigen Stellen können auch mehrere Bohrungen zusätzlich ausgespart sein.

Die Längsachsen der Bohrungen verlaufen grundsätzlich auf der Mittelebene des Rahmens, zweckmässig jeweils senkrecht zur Innenebene des betreffenden Rahmenteils. Selbstverständlich könnten die Längsachsen der Bohrungen auch einzeln oder gruppenweise ausserhalb der erwähnten Ebene liegen und/oder sonst schräg angeordnet sein.

Es ist von wesentlicher Bedeutung, dass die Haltestifte entlang ihrer Längsachse frei verschiebbar sind, damit die Distanz zwischen dem Rahmen und dem Präparationsmodell optimal überbrückt werden kann.

Im Rahmen kann an einer oder mehreren Positionen ein schwenkbarer Zylinder, vorzugsweise mit parallel oder senkrecht zum Rahmen verlaufender Längsachse, oder ein Kugelgelenkkopf eingebaut sein, jeweils mit wenigstens einem positionierbaren Haltestift.

Für kompliziertere Präparationsmodelle ist es von Vorteil, wenn der Rahmen wenigstens teilweise zweiteilig ausgebildet ist, mit wenigstens einer fixen, beispielsweise querschnittlich schwalbenschwanz-, I- oder T-förmig ausgebildeten Führungsschiene und wenigstens einem darauf gleitenden arretierbaren Schlitten, welcher wenigstens eine Bohrung für einen Haltestift aufweist. So kann die Positionierung der Bohrungen entlang des Rahmens nicht nur an bestimmten Stellen erfolgen, sondern stufenlos einstellbar sein.

Nach einer Weiterentwicklung kann in einem wie vorstehend ausgebildeten Schlitten ein schwenkbarer Zylinder ausgebildet sein, vorzugsweise mit parallel oder senkrecht zum Rahmen verlaufender Längsachse.

Auf einer zylinderförmig ausgebildeten fixen Führungsschiene kann auch wenigstens ein dreh- und längsverschiebbarer, hohlzylindrisch ausgebildeter Schlitten mit wenigstens einer Bohrung angeordnet sein. Damit wird ein weiterer Freihheitsgrad gewonnen, die Haltestifte können nicht nur in Richtung des Rahmens verschoben, sondern auch senkrecht dazu geschwenkt werden.

Nach einer dritten Variante schliesslich kann wenigstens ein Kugelgelenkkopf in einem oder mehreren Schlitten gelagert sein, womit die Haltestifte nicht nur längsverschiebbar sondern in beliebiger Richtung schwenkbar sind.

Sowohl Schlitten, als auch Schwenkzylinder und Kugelgelenkkopf sind mit jeweils an sich bekannten Mitteln in beliebiger Position arretierbar, insbesondere mit einer Fixierschraube.

In bezug auf das Verfahren zur Positionierung eines Präparationsmodells in einer Haltevorrichtung wird die Aufgabe erfindungsgemäss dadurch gelöst, dass der Rahmen und das Präparationsmodell ausserhalb der Vermessungsmaschine fixiert werden, die Anzahl und Position der Haltestifte festgelegt, diese in die betreffende Bohrung eingeführt und mit stimseitig aufgetragenem Haftvermittler an die Oberfläche des Präparationsmodells angelegt sowie alle Haltestifte und deren Halterungen im Rahmen fixiert werden, und die bestückte Haltevorrichtung nach dem Aushärten des Haftvermittlers freigelegt wird. Danach kann die Haltevorrichtung in der Vermessungsmaschine in vordefinierter Position eingespannt werden.

Es ist von erfindungswesentlicher Bedeutung, dass die Haltestifte nicht auf die Oberfläche des Präparationsmodells gepresst, sondern ohne Druckausübung angelegt werden, so dass keine Spannungen entstehen.

Eine besonders einfache und daher vorteilhafte Fixierung der Haltestifte erfolgt durch das Auftupfen von etwas Wachs oder Klebstoff an der betreffenden Stelle des Rahmens. Im übrigen werden auch alle Fixierschrauben und dgl. Befestigungsmittel angezogen.

Wie bereits erwähnt, wird das Präparationsmodell zusammen mit den Haltestiften vermessen. Zuerst wird die eine Seite des Präparationsmodells vermessen, dann wird die auf die Rotationswelle einer Vermessungsmaschine aufgespannte Haltevorrichtung gewendet und die zweite Seite des Präparationsmodells vermessen bzw. digitalisiert.

Die erfindungsgemässe Haltevorrichtung hat mehrere Vorteile:
- Der Individualität von Präparationsmodellen ist vollumfänglich Rechnung getragen durch die Möglichkeit der Variation der Haltepositionen.
- Die hinterschneidungsfreie Ausrichtung des Präparationsmodells kann ausserhalb der Vermessungsmaschine erfolgen und wird nicht durch eingeschränkte Einsichts- und Bewegungsmöglichkeiten behindert.
- Die Haltevorrichtung ist nach dem Ausbau des Präparationsmodells wiederverwendbar.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine perspektivische Darstellung eines geschlossenen Rahmens,
- Fig. 2 eine Ansicht eines offenen Rahmens,
- Fig. 3 eine Ansicht eines geschlossenen Rahmens mit Präparationsmodell,
- Fig. 4 eine Seitenansicht von Fig. 3 im Schnitt,
- Fig. 5 eine aufgeschnittene Ansicht eines in einen Rahmen eingesetzten Haltestiftes,
- Fig. 6 eine Variante von Fig. 5,
- Fig. 7 eine weitere Variante gemäss Fig. 5, in geschnittener Draufsicht,
- Fig. 8 einen Schnitt durch einen Rahmen mit Kugelkopfgelenk,
- Fig. 9 einen Schnitt durch einen zweiteiligen Rahmen,
- Fig. 10 eine Ansicht gemäss Fig. 9,
- Fig. 11 einen Schnitt durch eine Variante eines zweiteiligen Rahmens,
- Fig. 12 einen Teilschnitt entlang der Längsmittelebene eines Rahmens,
- Fig. 13 einen Schnitt gemäss XIII-XIII in Fig. 12,
- Fig. 14 eine Variante gemäss Fig. 12, und
- Fig. 15 einen Schnitt gemäss XV-XV in Fig. 14.

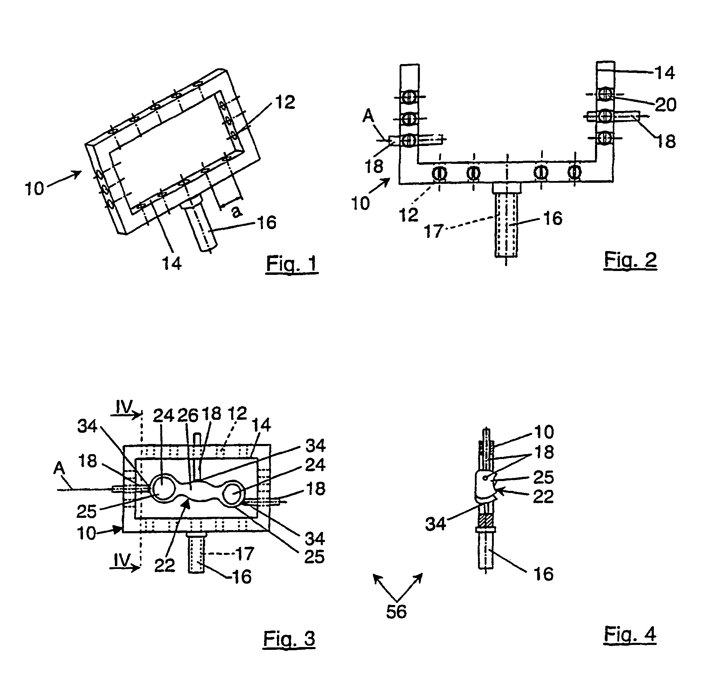

Fig. 1 zeigt einen geschlossenen Rahmen 10 einer erfindungsgemässen Haltevorrichtung. Der Rahmen 10 besteht aus einer Aluminiumlegierung und ist mechanisch stabil. Über den ganzen Umfang des eine rechteckige Grundform aufweisenden Rahmens 10 sind in regelmässigem Abstand a Bohrungen 12 für in Fig. 1 nicht dargestellte Haltestifte angebracht. Die Bohrungen 12 verlaufen senkrecht zur Innenfläche 14 des Rahmens 10, die Längsachsen A der Bohrungen sind auf der Mittelebene des Rahmens angebracht. In der Mitte einer Längsseite des Rahmens ist ein maschinenseitiger Spannadapter 16 angeflanscht. Dieser wird auf der Rotationswelle einer nicht dargestellten Vermessungsmaschine verrutsch- und verdrehsicher in einer bestimmten Position befestigt. Nach einer Variante wird der Spannadapter 16 in der Mitte der Schmalseite des Rahmens 10 angeflanscht.

Fig. 2 zeigt einen offenen, im wesentlichen U-förmigen Rahmen 10. Die beiden Schenkel des Rahmens 10 sind von etwa gleicher Länge wie die Schmalseiten eines geschlossenen Rahmens. In die gestrichelt angedeuteten Bohrungen 12 des Rahmens sind zwei Haltestifte unterschiedlich tief eingeführt und mit je einer Fixierschraube 20 befestigt. Aufgrund der geringen wirkenden Kräfte muss der Rahmen nicht sehr steif ausgeführt sein. Der offene Rahmen 10 gemäss Fig. 2 bietet eine bessere Zugänglichkeit und auch die Möglichkeit zur Aufnahme von sehr stark gekrümmten Präparationsmodellen. Allenfalls wird die Plazierung der Haltestifte 18 etwas eingeschränkt gegenüber einem geschlossenen Rahmen 10. Am Spannadapter 16 ist eine Verdrehsicherung 17 vorgesehen, welche in Form einer Abflachung oder eines Bolzens ausgeführt ist und damit ein vorbestimmter Indikator für die hinterschneidungsfreie Position der Haltevorrichtung darstellt.

In Fig. 3 ist ein individuell gefertigtes dreigliedriges Präparationsmodell 22 aus Wachs, im vorliegenden Fall ein Grundgerüstmodell, mit drei zylindrischen Haltestiften 18 in einem rechteckigen Rahmen 10 befestigt. Der Rahmen besteht im vorliegenden Fall aus Kunststoff, hat 50 mm Länge und 30 mm Breite und eine rechteckige Aussparung von 42 mm Länge und 22 mm Breite. Der Querschnitt des Rahmens ist rechteckig, mit 6 mm Höhe und 4 mm Breite. Auf den Schmalseiten des Rahmens 10 sind jeweils drei Durchgangsbohrungen 12, auf der Längsseite des Spannadapters 16 fünf Bohrungen 12, auf der gegenüberliegenden Längsseite sieben Bohrungen 12 ausgebildet. Die Bohrungen haben jeweils 1,25 mm Durchmesser. Drei gerade zylindrische Haltestifte aus Kunststoff mit 1,2 mm Durchmesser werden durch drei vorausbestimmte Bohrungen 12 geschoben. Das Präparationsmodell 22 wird zunächst hinterschneidungsfrei ausgerichtet, so dass ein Fräswerkzeug potentiell aus einer Richtung, seiner Bearbeitungsrichtung, die Oberfläche bearbeiten könnte. Vorzugsweise wird die Ausrichtung an den Kavitäten 24 des Präparationsmodells 22 vorgenommen, weil dieser Teil der Oberfläche den schwierigsten und qualitätsbestimmenden Teil darstellt. Das Präparationsmodell 22 wird exakt in dieser ausgerichteten Position gehalten und der Rahmen 10 mit den Haltestiften 18 mit der Ausnehmung über das Präparationsmodell 22 gelegt. Die Haltestifte 18 werden vorsichtig entlang ihrer axialen Richtung A geschoben, bis sie mit dem stirnseitig aufgetragenen Haftvermittler 34 (Wachs) das Präparationsmodell 22 berühren, und dadurch angewachst.

Die Haltestifte 18 sind mesial und distal an der Aussenseite der beiden Käppchen 25 und lingual am Brückenglied 26 verbunden. Die Fixierung der Haltestifte 18 am Rahmen 10 erfolgt mit nicht dargestellten Fixierschrauben 20.

Dieser bestückte Rahmen mit den Haltestiften 18 und dem eingelegten Präparationsmodell 22 wird in einer Vermessungsmaschine mittels des maschinenseitigen Spannadapters 16 verrutsch- und verdrehsicher eingelegt. Der Spannadapter 16 verfügt vorzugsweise über eine Markierung, z.B. eine Abflachung oder einen Querstift, so dass er in der Vermessungsmaschine eine vorausbestimmte Position einnimmt.

Nach dem Einspannen kann das Präparationsmodell 22 zuerst von einer, dann von der anderen Seite vermessen werden. Die Haltestifte 18 werden zusammen mit dem Präparationsmodell 22 vermessen und dienen der sicheren Aufnahme der Bearbeitungskräfte beim späteren Materialabtrag eines Rohlings. Die Haltekräfte während des Vermessens sind klein, es treten in der Hauptsache Beschleunigungskräfte, Gravitationskräfte und allenfalls die Andruckkraft einer taktilen Vermessung auf. Nach dem Vermessen wird der Rahmen 10 mit dem Präparationsmodell 22 aus der Vermessungsmaschine herausgenommen, die Fixierschrauben 20 gelöst und die Haltestifte 18 durch Drehen vom Präparationsmodell 22 abgelöst. Der Rahmen 10 und die Haltestifte 18 sind wiederverwendbar, gleichgültig ob sie aus Metall und/oder Kunststoff bestehen.

Beim Einführen ist auf den Haltestiften 18, wie erwähnt, stimseitig ein Haftvermittler 34 aufgetragen, in der Regel ein Wachs oder ein thermoplastischer Kleber, welcher den Haltestift 18 beim Anlegen an das Präparationsmodell 22 fixiert. Der Haftvermittler 34 kann auch bei bereits in die Durchgangsbohrungen 12 eingeführten Haltestiften 18 nachträglich, kurz vor der Berührung mit dem Präparationsmodell 22, auf die Haltestifte 18 aufgetragen werden.

Die vom Rahmen 10 nach aussen abkragenden Haltestifte 18 werden vorzugsweise oberflächenbündig abgetrennt.

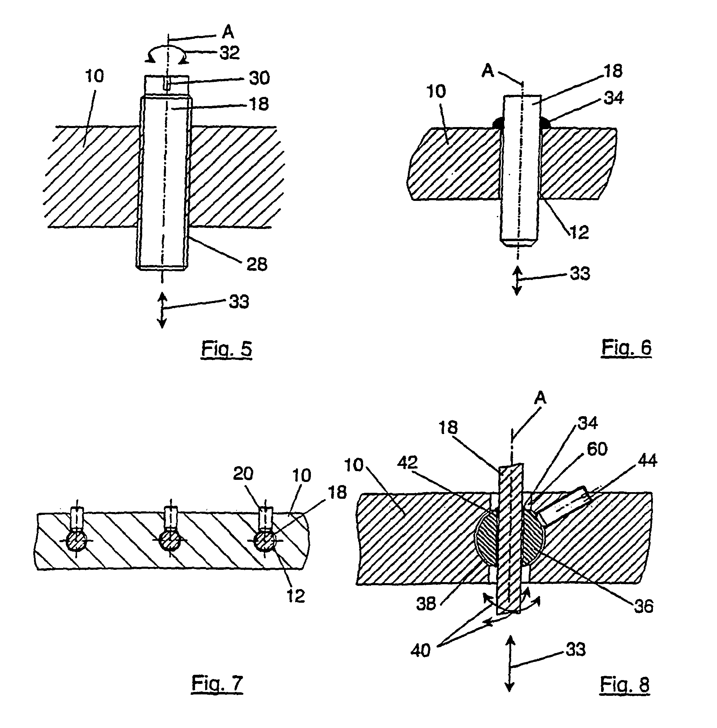

Nach der Ausführungsform gemäss Fig. 5 ist eine Bohrung 12 mit einem Innenschraubengewinde ausgebildet. Darin wird ein mit einem Aussengewinde 28 versehener Haltestift 18 eingeschraubt. Ein Diagonalschlitz 30 ermöglicht das Drehen des Haltestiftes 18 mit einem Schraubenzieher, was mit einem Doppelpfeil 32 angedeutet ist. Ein zweiter Doppelpfeil 33 deutet die axialen Bewegungsrichtungen des Haltestiftes 18 an.

Nach der Variante gemäss Fig. 6 ist ein Haltestift 18 mit Spiel (lose Passung) in eine Bohrung 12 im Rahmen 10 eingeführt. Er kann in axialer Richtung A frei verschoben werden, was mit dem Doppelpfeil 33 angedeutet wird. Die Fixierung erfolgt mittels eines Haftvermittlers 34, einem Wachs oder einem Kleber, welcher teilweise in den Spalt zwischen Rahmen und Haltestift eindringt und so eine gute Fixierung gewährleistet.

In Fig. 7 ist die Blickrichtung in Längsrichtung der Haltestifte 18, welche ebenfalls lose in Bohrungen 12 im Rahmen 10 eingeführt sind. Die Festlegung der Haltestifte 18 erfolgt hier mit Fixierschrauben 20.

Alle Fixiermöglichkeiten sind frei kombinierbar. Wichtig ist die Eigenschaft, dass die Haltestifte 18 durch Verschieben in ihrer axialen Richtung A an das Präparationsmodell 22 (Fig. 3) herangeschoben, dort angelegt werden können und anschliessend im Rahmen fixiert sind.

Nach einer weiteren Variante gemäss Fig. 8 kann ein Haltestift 18 mittels eines Kugelgelenkkopfes 36 in einer entsprechenden Gelenkpfanne 38 des Rahmens 10 gelagert sein. Bei der Befestigung des Präparationsmodells 22 (Fig. 3) kann der Haltestift 18 in axialer Richtung A eingeschoben und dank der freien Drehbarkeit des Kugelkopfgelenkes 36 in zwei voneinander linear unabhängigen Richtungen geschwenkt werden, was durch zwei gekreuzte Doppelpfeile 40 angedeutet ist. Nach dem Aushärten des Haftvermittlers 34 an der Oberfläche des Präparationsmodells 22 (Fig. 3) wird Haltestift 18 mit dem Haftvermittler 34 in der zentralen Bohrung 42 des Kugelgelenkkopfes 36 fixiert und dann der Kugelgelenkkopf 36 mit einer Fixierschraube 44 arretiert. Eine Aussparung 60 begrenzt den Schwenkbereich des Haltestifts 18 in Richtung der Doppelpfeile 40.

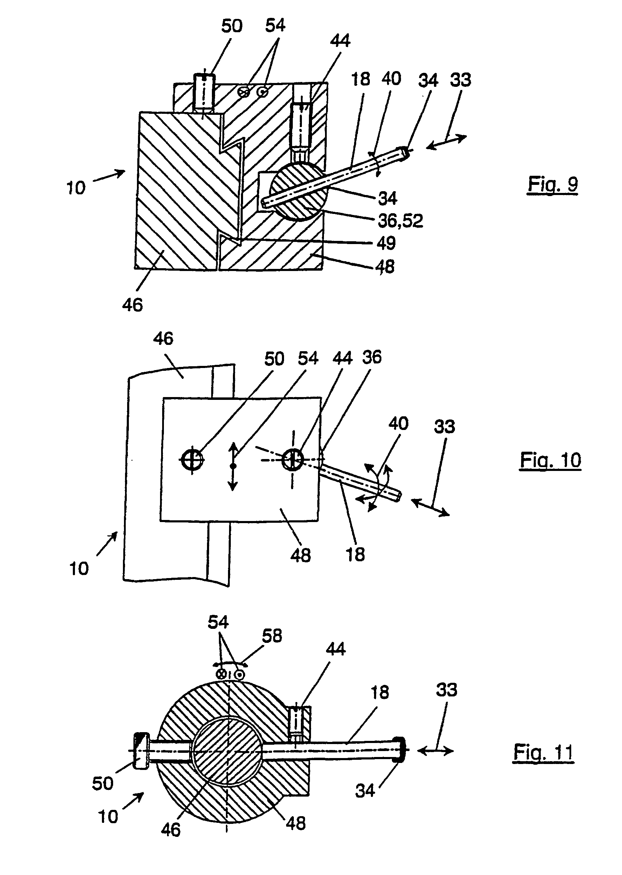

Fig. 9 zeigt einen Querschnitt durch einen zweiteilig ausgebildeten Rahmen 10. Auf einer fixen Führungsschiene 46 gleitet ein Schlitten 48, der über eine Schwalbenschwanzführung 49 gehaltert ist. Der Schlitten 48 ist entlang der Schwalbenschwanzführung 49 frei verschiebbar und kann in jeder Position durch eine Fixierschraube 50 arretiert werden. In einer entsprechenden Aussparung des Schlittens 48 ist ein Kugelgelenkkopf 36 oder ein schwenkbarer Zylinder 52 gelagert. Der in Richtung A des Doppelpfeils 33 axial verschiebbare Haltestift 18 kann so mit seiner von einem Haftvermittler 34 bedeckten Stirnseite an jede beliebige Position im Rahmen gebracht werden. Konstruktionsbedingt ist die Verschiebung in Richtung des Doppelpfeils 33 beschränkt. Nach dem Aushärten des Haftvermittlers 34 auf dem Präparationsmodell 22 (Fig. 3) erfolgt die Arretierung mit einem Haftvermittler 34 für den Haltestift 18, einer Fixierschraube 44 für den Kugelgelenkkopf 36 oder den schwenkbaren Zylinder 52 und die Fixierschraube 50 für den Schlitten 48, welcher in Richtung des Doppelpfeils 54 verschiebbar ist.

Fig. 10 zeigt die Variante mit dem Kugelgelenkkopf 36 von Fig. 9 in anderer Blickrichtung.

Fig. 11 zeigt eine weitere Ausführungsform mit einer fixen Führungsschiene 46 mit zylindrischem Querschnitt und einen darauf frei verschieb- und drehbaren, hohlzylindrischen Schlitten 48. Die Verschiebung des Schlittens 48 erfolgt in Richtung des Doppelpfeils 54, die Drehung in Richtung des Doppelpfeils 58. Mit den in axialer Richtung A im Sinne des Doppelpfeils 33 verschiebbaren Haltestiften kann so mit deren Stirnseite zu jedem Punkt auf der Oberfläche des Präparationsmodells 22 (Fig. 3) gefunden werden. Nach dem Aushärten des Haftvermittlers 34 auf der Oberfläche des Präparationsmodells 22 werden die Fixierschrauben 44 und 50 angezogen und so die Haltestifte 18 und der Schlitten 48 fixiert.

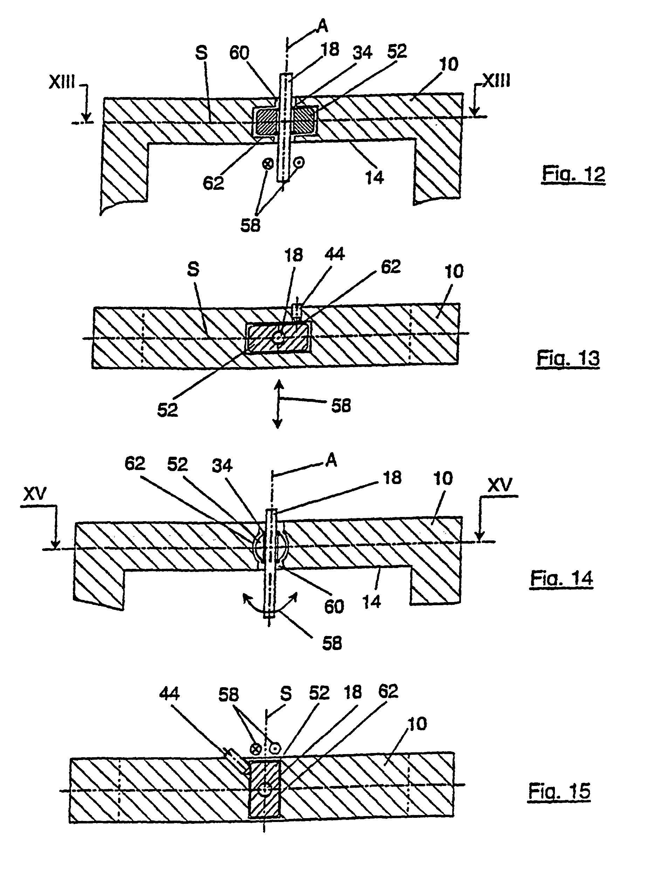

Fig. 12, 13 zeigen einen im Rahmen 10 gelagerten Zylinder 52 mit auf der Rahmenebene verlaufender Schwenkachse S, welche auch parallel zur betreffenden Innenfläche 14 verläuft. Im in Richtung des Doppelpfeils 58 schwenkbaren Zylinder 52 ist längsverschiebbar ein Haltestift 18 geführt und mit einem Haftvermittler 34 fixiert. Die Schwenkbewegung in Richtung des Doppelpfeils 58 wird durch die Dimensionen einer Aussparung 60 mit einem Zylinderlager 62 beschränkt. Die Schwenkposition des Zylinders 52 wird mit einer Fixierschraube 44 beschränkt.

Fig. 14, 15 entsprechen im wesentlichen den vorhergehenden beiden Figuren. die Achse S des Zylinders 52 verläuft jedoch senkrecht zur Rahmenebene und parallel zur betreffenden Innenfläche 14.

Es versteht sich von selbst, dass in allen Ausführungsformen gemäss den Fig. 12 bis 15 auch mehr als ein Haltestift 14 pro Zylinder angeordnet sein kann.

## Patentansprüche

1. Haltevorrichtung (56) mit einem zahntechnisch hergestellten, individuellen Präparationsmodell (22) und Mitteln zum Aufspannen der Vorrichtung in einer Vermessungsmaschine,
**dadurch gekennzeichnet, dass**
die Haltevorrichtung (56) einen mechanisch stabilen Rahmen (10) mit in Abstand (a) angeordneten Bohrungen (12) aufweist, in denen wenigstens zwei zumindest in axialer Richtung (A) verschiebbare Haltestifte (18) arretiert sind, welche mittels eines Haftvermittlers (34) stimseitig mit dem hinterschneidungsfrei ausgerichteten Präparationsmodell (22) verbunden sind und dieses starr und spannungsfrei am Rahmen (10) fixieren, und der bestückte Rahmen (10) mit einem maschinenseitigen Spannadapter (16) verrutsch- und verdrehsicher in der Vermessungsmaschine einspannbar ist.

2. Haltevorrichtung (56) nach Anspruch 1, **dadurch gekennzeichnet, dass** der Rahmen (10) geschlossen oder U-förmig mit sich im wesentlichen über die Dimensionen des Präparationsmodells (22) erstreckenden Schenkeln ausgebildet ist.

3. Haltevorrichtung (56) nach Anspruch 1 oder 2, **dadurch gekennzeichnet, dass** der Rahmen (10) quadratisch oder rechtwinklig ausgebildet ist und vorzugsweise aus Metall oder Kunststoff besteht.

4. Haltevorrichtung (56) nach einem der Ansprüche 1 bis 3, **dadurch gekennzeichnet, dass** die Bohrungen (12) in der Rahmenebene, vorzugsweise in senkrechter Richtung (A) zur Innenfläche (14) des betreffenden Teils des Rahmens (10) verlaufen.

5. Haltevorrichtung (56) nach einem der Ansprüche 1 bis 4, **dadurch gekennzeichnet, dass** die Haltestifte (18) gerade oder im Bereich des Präparationsmodells (22) auch gebogen ausgebildet sind, und stirnseitig bevorzugt ein Wachs, Klebstoff oder lichthärtender Modellierkunststoff als Haftvermittler (34) aufgetragen ist.

6. Haltevorrichtung (56) nach einem der Ansprüche 1 bis 5, **dadurch gekennzeichnet, dass** wenigstens ein Teil des geraden Bereichs der Haltestifte (18) ein Aussengewinde und die entsprechenden Bohrungen (12) ein Innengewinde aufweisen, im Rahmen (10) eine Fixierschraube (20) oder ein Haftvermittler (34) vorgesehen ist.

7. Haltevorrichtung (56) nach einem der Ansprüche 1 bis 6, **dadurch gekennzeichnet, dass** der Rahmen (10) wenigstens teilweise zweiteilig ausgebildet ist, mit fixen Führungsschienen (46) und arretierbaren Schlitten (48), welche letzteren wenigstens eine Bohrung (12) für Haltestifte (18) aufweisen.

8. Haltevorrichtung (56) nach Anspruch 7, **dadurch gekennzeichnet, dass**, auf vorzugsweise schwalbenschwanzförmig, I- oder T-förmig ausgebildeten fixen Führungsschienen (46) längsverschiebbare Schlitten (48) ausgebildet sind, welche in entsprechenden Gelenkpfannen (38) arretierbare, schwenkbare Zylinder (52) oder Kugelgelenkköpfe (36) mit einer Bohrung für Hattestifte (18) haben.

9. Haltevorrichtung (56) nach Anspruch 7, **dadurch gekennzeichnet, dass** auf zylinderförmig ausgebildeten fixen Führungsschienen (46) hohlzylindrische, auch drehbare Schlitten (48) mit wenigstens einer Bohrung für Haltestifte (18) ausgebildet sind.

10. Verfahren zur Positionierung eines Präparationsmodells (22) in einer Haltevorrichtung (56) nach einem der Ansprüche 1 bis 9, wobei der Rahmen (10) und das Präparationsmodell (22) ausserhalb der Vermessungsmaschine fixiert werden, die Anzahl und Position der Haltestifte (18) festgelegt, diese in die betreffende Bohrung (12) eingeführt und mit stimseitig aufgetragenem Haftvermittler (34) an die Oberfläche des Präparationsmodells (22) gelegt sowie alle Haltestifte (18) verschiebungs- und drehfest arretiert werden, und die bestückte Haltevorrichtung (56) nach dem Aushärten des Haftvermittlers (34) freigelegt wird.

## Claims

1. Holding device (56) comprising an individual preparation model (22) produced by dental technology and means for clamping the device in a measuring machine, **characterised in that** the holding device (56) comprises a mechanically stable frame (10) with holes (12) arranged at a spacing (a), in which at least two holding pins (18) which can be displaced in the axial direction (A) are locked, the holding pins (18) being connected on the end face by means of a bonding agent (34) to the preparation model (22) which is aligned free of undercuts, and fixing it rigidly and without stress to the frame (10), and the equipped frame (10) can be clamped into the measuring machine in a manner secured against slipping and rotation by a clamping adapter (16) on the machine side.

2. Holding device (56) according to claim 1, **characterised in that** the frame (10) is designed to be closed or U-shaped with sides extending substantially over the dimensions of the preparation model (22).

3. Holding device (56) according to claim 1 or 2, **characterised in that** the frame (10) is square or rectangular in design and is preferably made of metal or plastics material.

4. Holding device (56) according to any one of claims 1 to 3, **characterised in that** the holes (12) extend in the frame plane, preferably in the perpendicular direction (A) to the inner face (14) of the relevant part of the frame (10).

5. Holding device (56) according to any one of claims 1 to 4, **characterised in that** the holding pins (18) are designed to be straight or also bent in the region of the preparation model (22) and preferably a wax, adhesive or light-curing modelling plastic material is applied on the end face as the bonding agent (34).

6. Holding device (56) according to any one of claims 1 to 5, **characterised in that** at least a part of the straight region of the holding pins (18) has an external thread and the corresponding holes (12) have an internal thread and a fixing screw (20) or a bonding agent (34) is provided in the frame (10).

7. Holding device (56) according to any one of claims 1 to 6, **characterised in that** the frame (10) is at least partially designed in two parts, comprising fixed guide rails (46) and lockable slides (48), the slides (48) comprising at least one hole (12) for the holding pins (18).

8. Holding device (56) according to claim 7, **characterised in that** slides (48) which are longitudinally displaceable on preferably dovetail-shaped, I-shaped or T-shaped fixed guided rails (46) are designed, having lockable, pivotable cylinders (52) or ball-and-socket heads (36) with a hole for the holding pins (18) in corresponding joint sockets (38).

9. Holding device (56) according to claim 7, **characterised in that** hollow cylindrical, and also rotatable, slides (48) with at least one hole for the holding pins (18), are formed on cylindrically designed fixed guide rails (46).

10. Method for positioning a preparation model (22) in a holding device (56) according to any one of claims 1 to 9, wherein the frame (10) and the preparation model (22) are fixed outside the measuring machine, the number and position of holding pins (18) is established, the holding pins (18) are inserted in the relevant hole (12) and placed with the bonding agent (34) applied to the end face on the surface of the preparation model (22), and all the holding pins (18) are locked so as to be secured against displacement and rotation, and the equipped holding device (56) is uncovered once the bonding agent (34) has cured.

## Revendications

1. Dispositif de maintien (56) comprenant un modèle individuel (22) de préparation, produit par technique dentaire, et des moyens de serrage du dispositif dans une machine de mesurage, **caractérisé en ce que** le dispositif de maintien (56) comprend un cadre mécaniquement stable (10) où sont ménagés des alésages (12) agencés à distance (a) les uns des autres dans lesquels sont bloquées au moins deux chevilles d'arrêt (18) coulissant au moins en direction axiale (A), qui sont connectées sur leurs faces frontales à l'aide d'un moyen adhésif (34) avec le modèle de préparation (22) orienté sans contre-dépouille et le fixent rigidement et sans contrainte au cadre (10), et **en ce que** le cadre garni (10) peut être serré dans la machine de mesurage sans pouvoir ni glisser ni tourner, à l'aide d'un adaptateur de serrage (16) monté sur le côté machine.

2. Dispositif de maintien (56) selon la revendication 1, **caractérisé en ce que** la structure du cadre (10) est fermée, ou en U à branches s'étendant essentiellement au-delà des dimensions du modèle de préparation (22).

3. Dispositif de maintien (56) selon la revendication 1 ou 2, **caractérisé en ce que** la structure du cadre (10) est carrée ou rectangulaire et **en ce qu'**il est de préférence en métal ou en matière plastique.

4. Dispositif de maintien (56) selon l'une quelconque des revendications précédentes, **caractérisé en ce que** les alésages (12) s'étendent dans le plan du cadre, de préférence dans une direction (A) perpendiculaire à la surface interne (14) de la partie concernée du cadre (10).

5. Dispositif de maintien (56) selon l'une quelconque des revendications précédentes, **caractérisé en ce que** la structure des chevilles d'arrêt (18) est rectiligne, ou éventuellement incurvée dans la zone du modèle de préparation (22), et **en ce qu'**une cire, une colle ou une matière plastique de modélisation durcissant à la lumière sont appliquées sur leurs côtés frontaux comme agent adhésif (34).

6. Dispositif de maintien (56) selon l'une quelconque des revendications précédentes, **caractérisé en ce qu'**au moins une partie de la zone rectiligne des chevilles d'arrêt (18) comporte un filet externe et **en ce que** les alésages correspondants (12) comportent un filet interne, et **en ce qu'**une vis de fixation (20) ou un agent adhésif (34) est prévu dans le cadre (10).

7. Dispositif de maintien (56) selon l'une quelconque des revendications précédentes, **caractérisé en ce que** la structure du cadre (10) est au moins partiellement en deux parties et qu'il comporte des rails de guidage fixes (46) et des coulisseaux blocables (48), ces derniers comportant au moins un alésage (12) pour des chevilles d'arrêt (18).

8. Dispositif de maintien (56) selon la revendication 7, **caractérisé en ce qu'**il comprend des coulisseaux qui coulissent longitudinalement (48) sur des rails de guidage fixes (46), de préférence en forme de queue d'aronde, de I ou de T, et qui comportent des cylindres (52) ou des joints de cardan (36) à rotules, pivotants et blocables dans des cavités articulaires correspondantes (38), et comportant au moins chacun un alésage pour cheville d'arrêt (18).

9. Dispositif de maintien (56) selon la revendication 7, **caractérisé en ce qu'**il comprend des coulisseaux cylindriques creux (48) qui peuvent aussi tourner sur des rails de guidage fixes (46) de structure cylindrique, et qui comportent chacun au moins un alésage pour cheville d'arrêt (18).

10. Procédé de positionnement d'un modèle de préparation (22) dans un dispositif de maintien (56) conforme à l'une quelconque des revendications 1 à 9, qui comprend les étapes consistant à:
fixer le cadre (10) et le modèle de préparation (22) en dehors de la machine de mesurage, déterminer le nombre et la position des chevilles d'arrêt (18), introduire chacune d'elles dans l'alésage correspondant (12) et la positionner sur la surface du modèle de préparation (22) au moyen d'un agent adhésif (34) appliqué sur la face frontale ainsi que bloquer toutes les chevilles d'arrêt (18) à coulissement et à rotation, et enlever le dispositif de maintien garni (56) après durcissement de l'agent adhésif.
